# EUROPEAN PATENT APPLICATION

(11) **EP 2 302 212 A1**
(43) Date of publication of application: **30.03.2011**
(21) Application number: 08765374.7
(22) Date of filing: 10.06.2008
(51) Int. Cl.: F03D 11/00, F03D 7/04

(54) **BLADE PITCH ANGLE CONTROL DEVICE AND WIND TURBINE GENERATOR**

(71) Applicant: Mitsubishi Heavy Industries, Ltd., Tokyo 108-8215 (JP)
(72) Inventor: NUMAJIRI, Tomohiro, Nagasaki-shi Nagasaki 850-8610 (JP)
(74) Representative: Intès, Didier Gérard André
(86) International application number: PCT/JP2008/060585
(87) International publication number: WO 2009/150713

(57) **Abstract**

A blade pitch-angle control apparatus (40) is provided which can reduce the number of machining processes required for manufacturing a hub and which improves the maintainability due to a reduction in weight of each of hydraulic cylinders (41A) and (41B). The blade pitch-angle control apparatus (40), which is used in a wind turbine generator having a plurality of blades and which individually operates the pitch angle of each of the blades, uses the two hydraulic cylinders (41A) and (41B) to operate each of the blades.

## Description

### Technical Field

The present invention relates to wind turbine generators, and more particularly, to a blade pitch-angle control apparatus that controls a blade pitch angle in a wind turbine.

### Background Art

In conventional techniques, propeller-type wind turbines used in wind turbine generators rotate when a plurality of blades (wind-turbine blades) attached to a rotor head receive wind. The rotation of the rotor head is increased in speed by a speed-increasing gearbox connected to the rotary shaft and then drives a generator to generate electricity.
In those wind turbine generators, the blade pitch angle of each blade is individually adjusted so as to obtain a predetermined rotating speed and output power depending on the wind conditions (for example, see Patent Document 1).

A conventional blade pitch-angle control apparatus that adjusts the blade pitch angle (hereinafter referred to as "pitch angle") has, for each blade, an actuator, such as a hydraulic cylinder, which pivots the blade to change the pitch angle in order to individually operate the blade to adjust the pitch angle.
Specifically, when three blades are attached to the rotor head, three hydraulic cylinders are provided for the respective blades to independently operate them.
Patent Document 1:
Japanese Unexamined Patent Application, Publication No. 2005-83308

### Disclosure of Invention

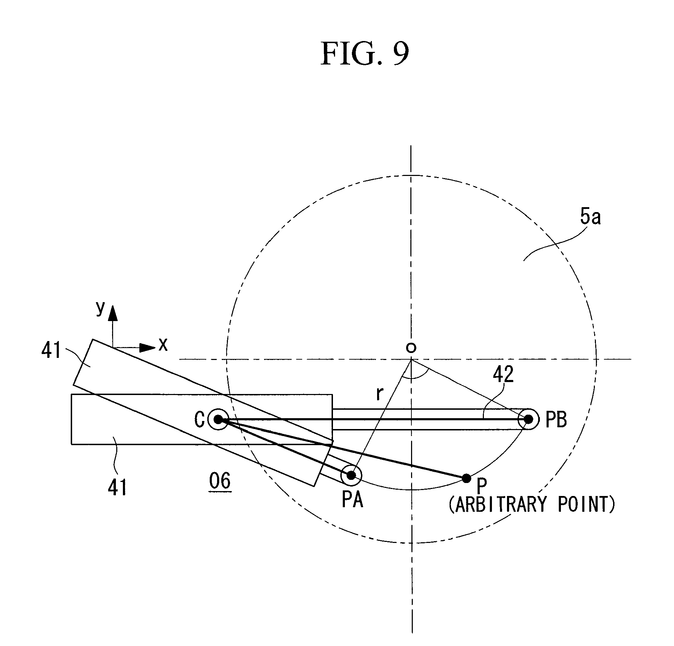

In a conventional blade pitch-angle control apparatus that individually operates each blade to adjust the pitch angle, one hydraulic cylinder 41 is attached, for each blade, to a hub 06 constituting a rotor head, as shown in FIG. 9, for example. Since the hydraulic cylinder 41 is attached to the hub 06 via a trunnion, for example, the hydraulic cylinder 41 can oscillate with a point C at the center with respect to the hub 06.

On the other hand, for example, a spindle is attached at an arbitrary point P located at a predetermined position on a blade-side end face 5a which is supported so as to be pivotable relative to the hub 06. The tip of a piston rod 42 that is extended and contracted by hydraulic pressure is connected to the spindle at the point P, so that the point P pivots within a range of about 90 degrees (between PA and PB) with the center point "O" of the blade-side end face 5a serving as the center, in response to the extension and contraction of the piston rod 42. Therefore, the blade pivoting together with the blade-side end face 5a revolves in a desired direction to change the pitch angle, thereby allowing the pitch angle to be controlled.

As described above, in the conventional configuration, one hydraulic cylinder 41 is operated to control the pitch angle of each blade. In order to ensure a pitch-angle control range (about 90 degrees) from fine (normal operation state) to feather (stop state), a hydraulic cylinder 41 having a long stroke needs to be employed.
Accordingly, the entire length of the hydraulic cylinder 41 is increased, and the hydraulic cylinder 41 is attached to the hub 06, to which the blade and the pitch-angle control apparatus are attached, as if the hydraulic cylinder 41 penetrated through the hub 06. Not only does the shape of the hub 06 become complicated, but also a trunnion bracket for attaching the hydraulic cylinder 41 needs to have a complicated structure.

Therefore, the number of machining processes required to manufacture the hub itself is increased, leading to a cost increase. Further, the weight of the hydraulic cylinder itself is also increased due to an increase in the size of the wind turbine generator, thus leading to deterioration of the maintainability, which is undesirable.
The present invention has been made in view of those circumstances, and an object of the present invention is to provide a blade pitch-angle control apparatus and a wind turbine generator capable of reducing the number of machining processes required to manufacture a hub and of improving the maintainability by reducing the weight of a hydraulic cylinder itself.

In order to solve the above-mentioned problems, the present invention employs the following solutions.
The present invention provides a blade pitch-angle control apparatus that is used in a wind turbine generator having a plurality of blades and that includes cylinders for individually operating a pitch angle of each of the blades, in which two cylinders are used to operate each of the blades.

According to this blade pitch-angle control apparatus, two cylinders are used to operate each of the blades, so that a desired pitch-angle control range can be ensured by using the cylinders, which have short strokes and are lightweight.

In the invention described above, it is preferable that the cylinders be disposed in parallel or slightly inclined towards each other. Since this arrangement allows machining processes required at cylinder installation positions to be performed in the same direction, the machining processes can be simplified. Further, when the cylinders are disposed in parallel or slightly inclined towards each other, hydraulic pipes to be connected to the cylinders can be disposed together in the same direction.

In the invention described above, it is preferable that the cylinders be disposed closer to a nacelle than the center position on a blade pivot axis. With this arrangement, inspection and maintenance work of the cylinders can be performed by making access from the nacelle side.

A wind turbine generator according to the present invention includes: a plurality of blades; and the blade pitch-angle control apparatus according to any one of claims 1 to 3, which individually operates a pitch angle of each of the blades.

According to this wind turbine generator, the blade pitch-angle control apparatus according to any one of claims 1 to 3, which individually operates a pitch angle of each of the blades, is included. Therefore, it is possible to use two cylinders which have short strokes and are lightweight to operate each of the blades and to ensure a desired pitch-angle control range for the blade.

According to the present invention, it is possible to provide a blade pitch-angle control apparatus and a wind turbine generator capable of reducing the number of machining processes required to manufacture a hub constituting a rotor head and of improving the maintainability by reducing the weight of a cylinder itself.

### Brief Description of Drawings

[FIG. 1] FIG. 1 shows a drive mechanism of a blade pitch-angle control apparatus of a wind turbine generator according to an embodiment of the present invention.
[FIG. 2] FIG. 2 shows a modification of the drive mechanism shown in FIG. 1.
[FIG. 3] FIG. 3 is a main-portion cross-sectional perspective view showing an example of a hub structure to which the blade pitch-angle control apparatus is attached.
[FIG. 4] FIG. 4 is a view showing an overview of the wind turbine generator according to the present invention.
[FIG. 5] FIG. 5 is a cross-sectional view showing an example inner configuration of a powertrain and the blade pitch-angle control apparatus, with a main portion near a nacelle being enlarged.
[FIG. 6] FIG. 6 is a cross-sectional view showing a first modification of FIG. 5.
[FIG. 7] FIG. 7 is a cross-sectional view showing a second modification of FIG. 5.
[FIG. 8] FIG. 8 is a cross-sectional view showing a third modification of FIG. 5.
[FIG. 9] FIG. 9 is a view showing a drive mechanism of a blade pitch-angle control apparatus provided in a conventional wind turbine generator.

### Explanation of Reference Signs:

- 1:: wind turbine generator
- 3:: nacelle
- 4:: rotor head
- 5:: blade (wind-turbine blade)
- 5a:: end face
- 6:: hub
- 6a:: plain bearing
- 10:: drive train
- 20:: generator
- 30:: speed-increasing gearbox
- 40:: blade angle control apparatus (control apparatus)
- 41A, 41B:: hydraulic cylinder
- 42A, 42B:: piston rod

### Best Mode for Carrying Out the Invention

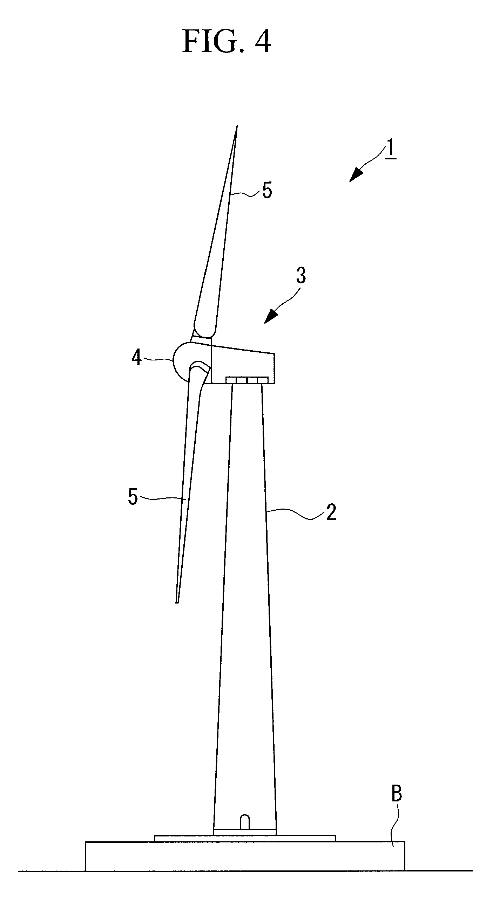

A blade pitch-angle control apparatus and a wind turbine generator according to an embodiment of the present invention will be described below with reference to the drawings.
A wind turbine generator 1 shown in FIG. 4 has a tower 2 provided upright on a foundation B, a nacelle 3 provided at the upper end of the tower 2, and a rotor head 4 provided on the nacelle 3 so as to be able to rotate about a substantially horizontal axis.

A plurality of (three in the illustrated example) blades (wind-turbine rotor blades) 5 are radially attached to the rotor head 4 around its rotary axis. Thus, the force of wind blowing against the blades 5 in a direction of the rotary axis of the rotor head 4 is converted into power that rotates the rotor head 4 about the rotary axis.
It should be noted that the illustrated wind turbine generator 1 is of an up-wind type in which the wind-turbine rotor blades 5 are rotated in front of the nacelle 3.

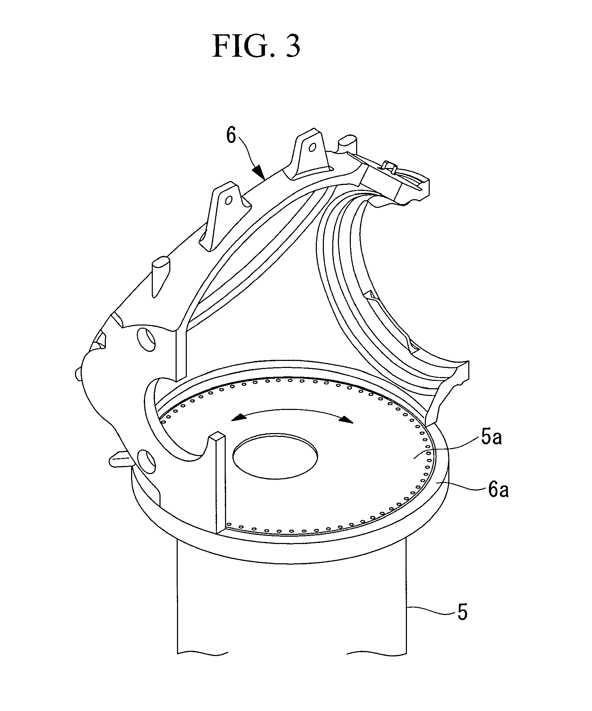

As shown in FIG. 3, the base part of each of the blades 5, which is located at the blade-root side, is attached to a hub 6 that constitutes the rotor head 4, so as to extend radially. Each blade 5 is pivotably supported by a slewing ring bearing 6a provided on the hub 6. It is preferable to use a rolling bearing, for example, as a plain bearing 6 to be used here. In FIG. 3, reference symbol 5a indicates a circular end face (blade-side end face) formed at the base part of the blade 5, which is cylindrical, and is a member on which a link mechanism of a blade angle control apparatus (hereinafter referred to as "control apparatus") 40, to be described later, is mounted.

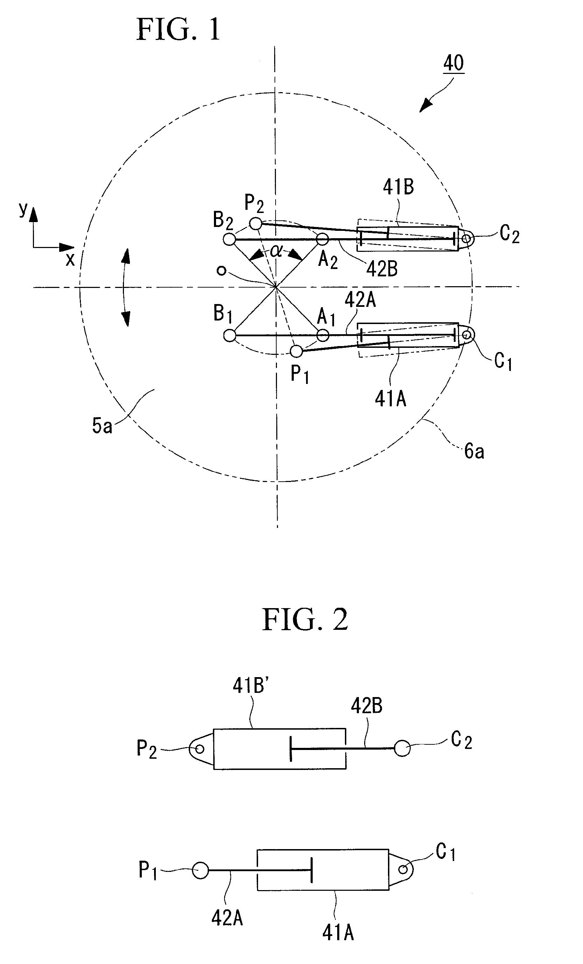

As shown in FIG. 1, for example, the wind turbine generator 1 includes the control apparatus 40, which can individually adjust the blade pitch angle of the blade 5.
The control apparatus 40 includes the link mechanism in which two hydraulic cylinders 41A and 41B are used for each of the three blades 5 attached to the hub 6 of the rotor head 4, for example, to individually operate (pivot) the pitch angle of the blade 5.

The base part of the blade 5 has a cylindrical shape and has a rim-like flange part (not shown) formed so as to circumferentially project outward in a radial direction. Since the flange part is pivotably supported by the slewing ring bearing 6a provided on the hub 6, the entire blade 5 can pivot with respect to the hub 6.
When a pair of the hydraulic cylinders 41A and 41B, provided in parallel at basic positions, to be described later, are operated, the blade 5 pivots within the range specified by a control angle α (usually about 90 degrees) from a fine position serving as a normal operation position to a feather position serving as a stop position, with the center point "O" of the end face 5a serving as the pivot center. Therefore, pitch angle control can be applied to the blade 5, whereby the pitch angle can be individually operated and adjusted.

The hydraulic cylinders 41A and 41B are disposed at the basic positions (the state shown in FIG. 1) approximately parallel to the x axis, as shown in FIG. 1, or slightly inclined towards each other. Fixed ends opposite to moving ends of cylinder main bodies that extend and contract piston rods 42A and 42B are supported at points C1 and C2 by the hub 6. Specifically, the hydraulic cylinders 41A and 41B are provided such that, when the fixed ends of the cylinder main bodies are supported by the hub 6 via trunnions, for example, the moving ends are allowed to oscillate with the points C1 and C2 of the fixed ends serving as fulcrums.

The piston rod 42A of the hydraulic cylinder 41A has a stroke from a most contracted position A1 to a most extended position B1. In the same way, the piston rod 42B of the hydraulic cylinder 41B has a stroke from a most contracted position A2 to a most extended position B2.
Tips of the piston rods 42A and 42B are oscillatably connected to spindles fixed at predetermined positions on the end face 5a. It should be noted that the positions at which the spindles are fixed on the end face 5a can be appropriately set depending on the conditions, such as the control angle α.

Therefore, when the control apparatus 40 operates the link mechanism to control the pitch angle of the blade 5, predetermined amounts of hydraulic pressure, which may be the same, are supplied to the hydraulic cylinders 41A and 41B.
The hydraulic pressure to be supplied here corresponds to the pitch angle of the blade 5 calculated based on the conditions, such as the wind speed, by a control part (not shown) of the wind turbine generator 1, for example.

In the configuration example shown in FIG. 1, when the piston rod 42A (42B) of the hydraulic cylinder 41A (41B) is positioned at the most contracted position A1 (A2), the piston rod 42B (42A) of the hydraulic cylinder 41B (41A) is positioned at the most extended position B2 (B1). Then, when amounts of hydraulic pressure that make the hydraulic cylinders 41A and 41B generate force in opposite directions are supplied, the piston rod 42A (42B) of the hydraulic cylinder 41A (41B) extends (contracts), thereby moving a point P1 (P2) connected to the spindle from the point A1 (B2) to the point B1 (A2) along an circular-arc trajectory bulging outward, as indicated by an imaginary line in FIG. 1.

As a result, the blade 5, for which the spindles are fixed at the predetermined positions of the end face 5a and which is pivotably supported by the plain bearing 6a, is rotated by clockwise (counterclockwise) revolution force from both the hydraulic cylinder 41A and the hydraulic cylinder 41B. Specifically, the hydraulic cylinder 41A (41B) supported by the hub 6, which is the fixed side, pushes the blade 5 and the other the hydraulic cylinder 41B (41A) pulls the blade 5, thereby allowing the blade 5 to turn clockwise (counterclockwise).
As described above, even when the control apparatus 40, in which the hydraulic cylinders 41A and 41B are used, as a pair for each blade, to revolve the blade 5 to adjust the pitch angle to have a desired value, employs the hydraulic cylinders 41A and 41B in which the strokes of the piston rods 42A and 42B are shortened, it is possible to obtain a pitch-angle control range of about 90 degrees in the same way as in conventional technologies.

In other words, with this two-cylinder configuration, if the conditions such as the diameter of the end face 5a and the control angle α are same as those in the conventional example shown in FIG. 9, an arrangement is allowed in which the distance (the radius of the circular-arc trajectory) from the center point "O" of the circle serving as the pivot center to each of the connecting points P1 and P2 is set shorter than that in a case where one cylinder is used (the radius r in FIG. 9). Thus, the strokes required for the hydraulic cylinders 41A and 41B can be shortened.
Further, since the hydraulic cylinders 41A and 41B, with shorter strokes, are compact, their weights are also reduced, making them lightweight. Thus, the hydraulic cylinders 41A and 41B can be accommodated in the hub 6; a through hole for a cylinder, which was conventionally required, is not required; and a trunnion part, a trunnion bracket structure, and the like are simplified. Therefore, the entire shape and structure of the hub 6 can be simplified. This simplification of the hub 6 is advantageous in terms of cost because the number of machining processes is reduced.

A modification may be employed in which only one of the pair of the hydraulic cylinders 41A and 41B is disposed in a reversed direction as shown in FIG. 2, for example. With this modified configuration, the same link mechanism as that in the embodiment described above can also be obtained.
Specifically, in the modification of FIG. 2, one hydraulic cylinder 41B' is disposed in a horizontally reversed direction, and the tip of the piston rod 42B is fixed to the hub 6 and oscillatably supported at the point C2. The fixed end of the cylinder main body is oscillatably connected, at the connecting point P2, to the spindle fixed at a predetermined position on the end face 5a.

In the above-described embodiment, the pair of hydraulic cylinders 41A and 41B are disposed approximately in parallel, but may be slightly inclined towards each other.
Since this arrangement of the hydraulic cylinders 41A and 41B allows machining processes required at cylinder installation positions to be performed in the same direction, the machining processes can be simplified. Specifically, since the machining surfaces at two positions can be machined from the same direction, it is possible to remove unnecessary work, thus facilitating the machining work and also reducing the machining time.
Furthermore, with the configuration where the hydraulic cylinders 41A and 41B are disposed in parallel or slightly inclined towards each other, hydraulic pipes to be connected to the hydraulic cylinders 41A and 41B can be disposed together in the same direction. Thus, the lengths of the pipes are reduced, and the paths of the pipes can also be simplified.

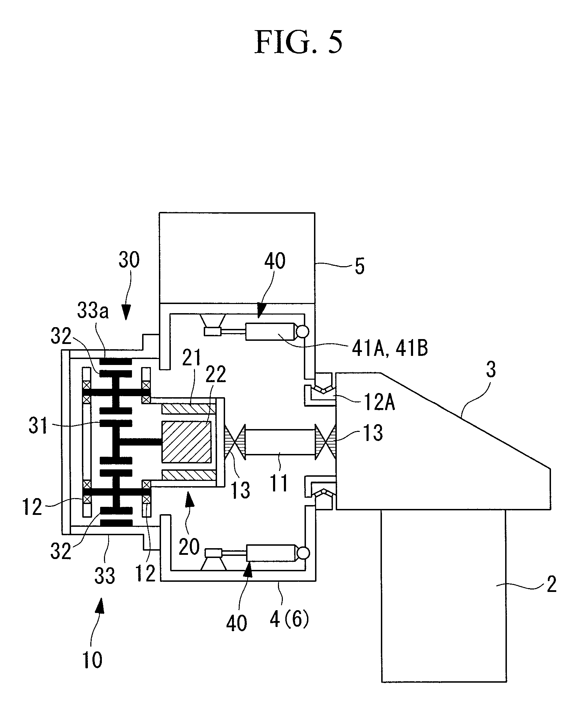

The above-described hydraulic cylinders 41A and 41B are provided closer to the nacelle 3 than the center point "O" of the circle of the end face 5a, serving as the center position of the pivot axis of the blade 5. Specifically, since the nacelle 3 is located at the right of FIG. 1, inspection and maintenance work of the cylinders 41A and 41B can be performed from the nacelle 3 side with easy access.
Specific installation examples of the hydraulic cylinders 41A and 41B will be described below with reference to FIGS. 5 to 8.

FIG. 5 is an enlarged main-portion cross-sectional view showing an example inner configuration of the rotor head 4 disposed in front of the nacelle 3 and a drive train 10 disposed in front of the rotor head 4, with a rotor head cover (not shown) removed.
The drive train 10 of this embodiment includes a speed-increasing gearbox 30 which increases the speed of rotation of the rotor head 4 and transfers the rotation to a generator 20. The speed-increasing gearbox 30 used in this example is a single-stage star-type speed-increasing gear. In FIG. 5, reference numeral 31 denotes a sun gear and reference numeral 32 denotes planet gears. In the star-type speed-increasing gearbox 30, the planet gears 32 are rotatably supported by a main shaft 11, which is a fixed side, and are engaged with a gear part 33a formed on the inner circumference surface of a casing 33 that rotates at an outer circumference side together with the rotor head 4.

In the drive train 10, the generator 20 is disposed closer to the nacelle 3 than the speed-increasing gearbox 30. In the configuration example shown in FIG. 5, at least part of the generator 20 is disposed inside the rotor head 4. As a result, the barycentric position of the drive train 10 is made close to the nacelle 3 (to a bearing 12A serving as a main bearing).
In FIG. 5, reference numeral 12 denotes bearings, 13 denotes flexible couplings, 21 denotes a stator, and 22 denotes a rotor.

In the rotor head 4 having this configuration, the control apparatuses 40 which independently control the pitch angles of the respective blades 5 are provided. Each pair of the hydraulic cylinders 41A and 41B, which revolves and drives the blade 5, is provided at the side of the nacelle 3, in the hub 6 constituting the rotor head 4.
Therefore, it is possible to make access to the hydraulic cylinders 41A and 41B from the nacelle 3, which can easily be reached through the tower 2, to perform work, such as maintenance, on the hydraulic cylinders 41A and 41B.

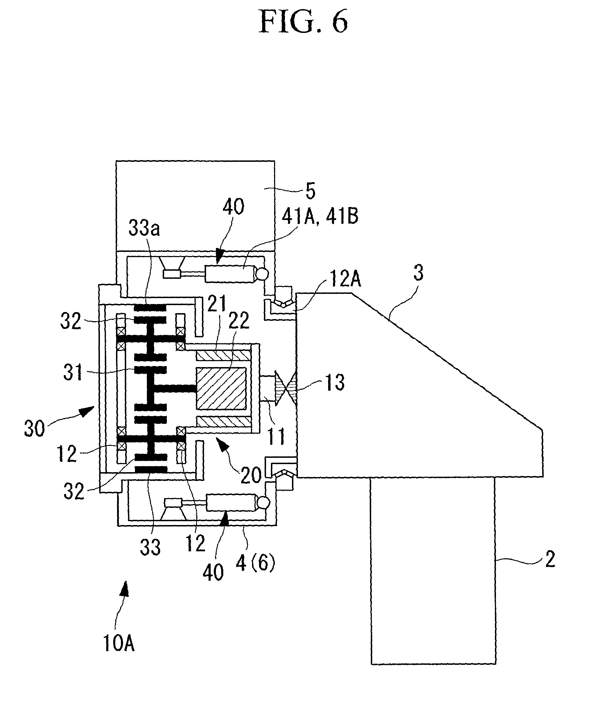

In a drive train 10A of a first modification shown in FIG. 6, the generator 20 is disposed closer to the nacelle 3 than the speed-increasing gearbox 30, and also, the generator 20 and part of the speed-increasing gearbox 30 are installed inside the rotor head 4. In the configuration of the first modification, the drive train 10 of the embodiment shown in FIG. 5 is moved toward the nacelle 3 as much as possible and the whole of the generator 20 and most part of the speed-increasing gearbox 30 are disposed inside the rotor head 4, thereby moving the barycentric position of the drive train 10A closer to the nacelle 3.

Therefore, in each of the above-described drive trains 10 and 10A, the casing 33 rotates at the same rotating speed as the rotor head 4, and the sun gear 31 is increased in speed based on the gear ratio of the gear part 33a of the casing 33, the planet gears 32, and the sun gear 31. Since the rotor 22 has the same shaft as the sun gear 31 in this example, the generator 20 of this embodiment also generates electricity by producing electromagnetic induction between the stator 21 and the rotor 22, which rotates at an increased speed from the rotating speed of the rotor head 4.
In each of the drive trains 10 and 10A having these configurations, the generator 20 is disposed closer to the nacelle 3 than the speed-increasing gearbox 30, and at least part of the generator 20 is disposed inside the rotor head 4, thereby allowing the barycentric position of the drive train itself to be closer to the nacelle 3.

Thus, the moment acting on the bearing 12A is reduced and the support structure can be lightened. Specifically, the load on the nacelle 3 supporting the bearing 12A is reduced, and the structure of the nacelle 3 can be accordingly simplified and lightened. Each of the drive trains 10 and 10A can be made to have a lightweight and compact structure by shortening the main shaft 11.

When the rotor head cover is removed for maintenance or equipment replacement in each of the drive trains 10 and 10A, the speed-increasing gearbox 30 is located at the end face side. Since the frequency of maintenance and the possibility of equipment replacement of the speed-increasing gearbox 30 are higher than those of the generator 20, the arrangement that allows work to be done while leaving the generator 20 intact is also effective in improving workability for maintenance and other work.

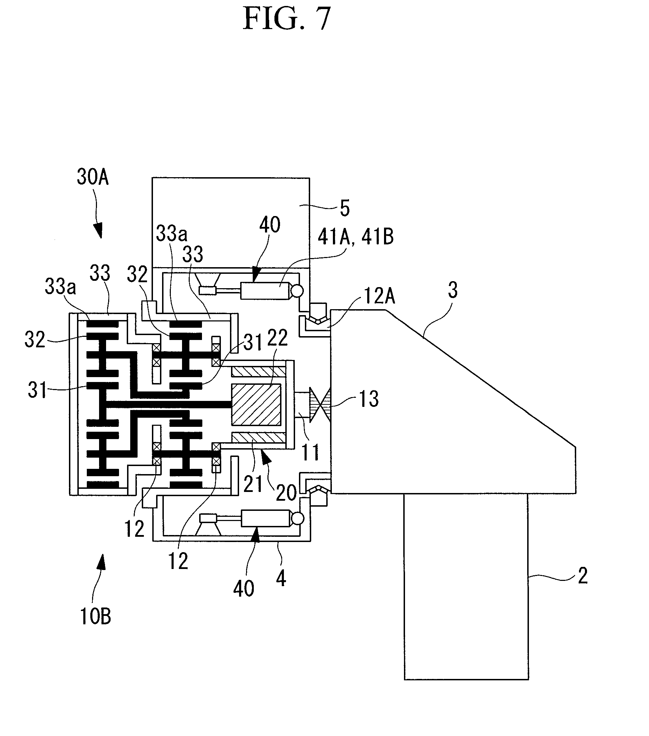

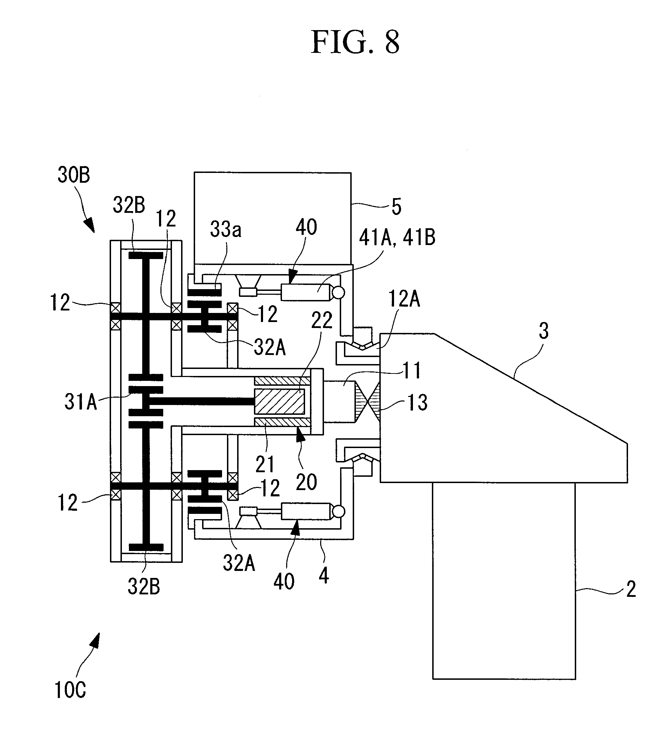

Further, the configuration in which the generator 20 is disposed closer to the nacelle 3 than the speed-increasing gearbox 30, as in the drive trains 10 and 10A, is not limited in terms of the combination of a speed-increasing gearbox and a generator. For example, a speed-increasing gearbox 30A of a second modification shown in FIG. 7 or a speed-increasing gearbox 30B of a third modification shown in FIG. 8 can be employed. In FIGS. 7 and 8, identical reference symbols are given to the same parts as those in the above-mentioned embodiment, and a detailed description thereof will be omitted.

In the second modification shown in FIG. 7, a drive train 10B having the two-stage star-and-planetary-type speed-increasing gear 30A is employed. In this case, since the generator 20 and about half of the speed-increasing gearbox 30A are disposed inside the rotor head 4, the barycentric position is close to the nacelle 3, thereby allowing a reduction in weight and size.
Further, in the drive train 10B, since the speed-increasing gearbox 30A is located at the end, good workability is provided for maintenance and other work.

In the third modification shown in FIG. 8, a drive train 10C having the speed-increasing gearbox 30B in which two-stage parallel gears are combined is employed. Also in this case, since the generator 20 and about half of the speed-increasing gearbox 30B are disposed inside the rotor head 4, the barycentric position is close to the nacelle 3, thereby allowing a reduction in weight and size. Further, in the drive train 10C, since the speed-increasing gearbox 30B is located at the distal end, good workability is provided for maintenance and other work.

As described above, the control apparatus 40 of the present invention is configured such that the two hydraulic cylinders 41A and 41B are used to operate each of the blades 5. A desired pitch-angle control range can be ensured even by using the cylinders 41A and 41B, which are lightweight and have the piston rods 42A and 42B with short strokes. Thus, in the control apparatus 40 of the present invention, it is easy to realize drive train configurations which were difficult to realize with the conventional configuration because there was no space due to a required hydraulic cylinder having a long stroke, specifically, the drive train configurations (see FIGS. 5 to 8) with which the generator 20 and/or at least part of the speed-increasing gearbox 30 is accommodated in the rotor head 4.

As described above, in the blade pitch-angle control apparatus of the present invention, the number of machining processes required to manufacture the hub 6 constituting the rotor head 4 can be reduced, and maintainability is improved due to a reduction in the weight of the hydraulic cylinders 41A and 41B themselves.
In the wind turbine generator 1 having the blade pitch-angle control apparatus, the two hydraulic cylinders 41A and 41B, which have short strokes and are lightweight, are used to operate one blade, and a desired pitch-angle control range can be ensured for each blade 5.
It should be noted that the present invention is not limited to the above-described embodiment, and modifications can be appropriately made without departing from the scope thereof.

## Claims

1. A blade pitch-angle control apparatus that is used in a wind turbine generator having a plurality of blades and that comprises cylinders for individually operating a pitch angle of each of the blades,
wherein two cylinders are used to operate each of the blades.

2. A blade pitch-angle control apparatus according to claim 1, wherein the cylinders are disposed in parallel or slightly inclined towards each other.

3. A blade pitch-angle control apparatus according to claim 1 or 2, wherein the cylinders are disposed closer to a nacelle than the center position on a blade pivot axis.

4. A wind turbine generator comprising: a plurality of blades; and a blade pitch-angle control apparatus according to any one of claims 1 to 3, which individually operates a pitch angle of each of the blades.
